Europäisches Patentamt

European Patent Office

Office européen des brevets

(19)

(11) Numéro de publication: **0 209 417 B1**

(12) **FASCICULE DE BREVET EUROPEEN**

(45) Date de publication du fascicule du brevet:
**14.09.88**

(51) Int. Cl.⁴: **B 60 N 1/06**

(21) Numéro de dépôt: **86401251.3**

(22) Date de dépôt: **10.06.86**

(54) Perfectionnements aux appuis-tête réglables et aux sièges équipés de tels appuis-tête.

(30) Priorité: **12.06.85 FR 8508887**

(43) Date de publication de la demande:
**21.01.87 Bulletin 87/4**

(45) Mention de la délivrance du brevet:
**14.09.88 Bulletin 88/37**

(84) Etats contractants désignés:
**BE DE GB IT SE**

(56) Documents cités:
**DE - A - 2 852 266**
**DE - A - 2 925 781**
**DE - A - 3 109 592**
**DE - A - 3 130 780**
**DE - A - 3 141 515**
**FR - A - 1 515 454**

(73) Titulaire: **BERTRAND FAURE AUTOMOBILE, 5, rue Auguste Brunot, ROCQUENCOURT (Yvelines) (FR)**

(72) Inventeur: **Boisset, Bernard, 4 Clos de Montfaucon, F-91150 Etampes (FR)**

(74) Mandataire: **Behaghel, Pierre et al, CABINET PLASSERAUD 84 rue d'Amsterdam, F-75009 Paris (FR)**

## Description

L'invention est relative aux appuis-tête réglables en hauteur et en inclinaison qui équipent les sièges, et notamment les sièges de véhicules.

Elle concerne également les sièges équipés de tels appuis-tête.

Elle vise plus particulièrement, parmi les appuis-tête du genre ci-dessus, ceux qui sont montés sur l'ossature du dossier du siège par l'intermédiaire de deux broches parallèles propres à coulisser verticalement dans des logements complémentaires solidaires de cette ossature.

Dans les modes de réalisation connus desdits appuis-tête, l'ossature de l'appui-tête est elle-même montée pivotante autour d'un axe horizontal transversal, c'est-à-dire s'étendant selon la largeur du siège, axe coupant lui-même les axes de ces deux broches au niveau de leurs extrémités supérieures.

La commande des pivotements de ces appuis-tête est malaisée et le blocage de ces pivotements est difficile à réaliser efficacement.

L'invention a pour but surtout de rémedier à ces inconvénients.

A cet effet, les appuis-tête du genre en question selon l'invention sont essentiellement caractérisés en ce que leur ossature est montée pivotante autour de respectivement deux axes horizontaux transversaux décalés longitudinalement l'un par rapport à l'autre et liés respectivement aux deux broches et en ce que des moyens actionables par la personne assise sur le siège sont prévus pour commander à volonté soit les coulissements verticaux simultanés et identiques des deux broches, soit les coulissements verticaux de l'une seulement de ces deux broches.

Dans des modes de réalisation préférés, on a recours en outre et l'une et/ou à l'autre des dispositions suivantes:

— chaque montage pivotant de la base de l'ossature de l'appui-tête est réalisé autour de l'extrémité rectiligne d'un prolongement d'une broche doublement coudé horizontalement, une première fois longitudinalement, vers l'avant pour une broche et vers l'arrière pour l'autre, et une seconde fois transversalement en direction de l'autre broche,

— chaque montage pivotant est réalisé autour d'un barreau rapporté par soudure contre la face avant (ou arrière) de l'extrémité supérieure d'une broche, extrémité elle-même décalée vers l'avant (ou vers l'arrière) par rapport à l'axe du tronçon coulissant de cette broche,

— chaque montage pivotant de la base de l'ossature de l'appui-tête est réalisé par emprisonnement d'un barreau cylindrique d'axe horizontal solidaire d'une broche entre deux demi-coquilles incurvées serrées l'une contre l'autre et faisant partie de ladite ossature de l'appui-tête,

— les moyens de commande des déplacements des broches comprennent deux crémaillères prévues respectivement sur les pieds, de ces deux broches, situés dans le dossier, deux pignons engrenant, directement ou non, avec respectivement ces deux crémaillères et immobilisés axialement, un organe de commande rotatif actionnable par la personne assise sur le siège, un élément transmetteur de couple solidarisé angulièrement avec l'organe de commande, et des organes d'accouplement agencés de façon à solidariser angulairement avec ledit élément transmetteur, soit l'un seulement des deux pignons soit ces deux pignons en même temps,

— les organes d'accouplement comprennent des crabots solidaires angulairement respectivement des pignons et de l'organe transmetteur et propres à être accouplés et désaccouplés entre eux par leurs simples déplacements relatifs axiaux, lesquels sont commandés par des déplacements axiaux de l'organe de commande,

— l'organe transmetteur de couple est une barre horizontale,

— l'organe transmetteur de couple est un câble souple et l'organe de commande rotatif est une poignée montée en un emplacement du siège facilement accessible par une main de la personne assise sur ce siège.

L'invention comprend, mises à part ces dispositions principales, certaines autres dispositions qui s'utilisent de préférence en même temps et dont il sera plus explicitement question ci-après.

Dans ce qui suit, l'on va décrire des modes de réalisation préférés de l'invention en se référant aux dessins ci-annexés d'une manière bien entendu non limitative.

Les figures 1 et 2, de ces dessins, montrent respectivement en coupe longitudinale verticale et en vue arrière, portions arrachées, un appui-tête établi selon l'invention et la portion supérieure du dossier de siège qu'il équipe.

Les figures 3 et 4 montrent respectivement deux variantes d'un tel ensemble selon des vues arrières partielles.

La figure 5 montre en vue latérale un détail de la variante de la figure 4.

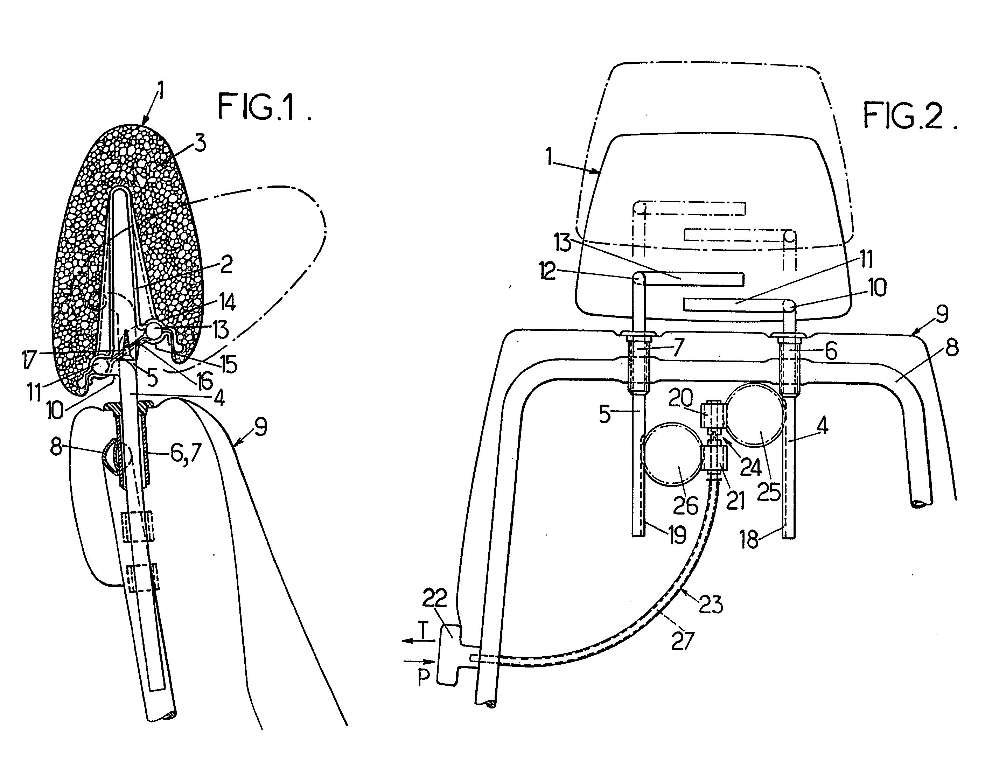

Dans le mode de réalisation des figures 1 et 2, l'appui-tête 1 comprend d'une façon connue en soi une ossature rigide interne 2 et un coussin de rembourrage 3 et il est supporté par deux broches verticales parallèles 4 et 5, elles-mêmes montées coulissantes dans deux douilles 6 et 7 solidarisées avec l'ossature tubulaire 8 du dossier 9 du siège correspondant.

L'extrémité supérieure de la broche 4 est coudée successivement selon un brin 10 orienté vers l'arrière du siège, puis transversalement, c'est-à-dire selon la largeur du siège, en direction de l'autre broche 5, de façon à constituer un brin ou barreau rectiligne terminal 11.

De même, l'extrémité supérieure de la broche 5 est coudée successivement selon un brin 12 orienté vers l'avant du siège, puis transversalement en direction de l'autre broche 4, de façon à constituer un brin ou barreau rectiligne terminal 13.

Les deux barreaux rectilignes terminaux 11 et 13 franchissent tous les deux le plan longitudinal médian du siège et sont décalés l'un par rapport à l'autre longitudinalement, c'est-à-dire selon la direction longitudinale du siège, d'une certaine distance qui est généralement de l'ordre de 5 à 10 centimètres.

L'ossature 2 de l'appui-tête est montée pivotante à la fois sur ces deux barreaux 11 et 13.

A cet effet, elle présente avantageusement deux coquilles semi-cylindriques 14 propres à coiffer jointivement les deux barreaux considérés à coagir respectivement avec deux autres coquilles semi-cylindriques 15 faisant partie d'un couvercle 16 lui-même assemblé par des vis 17 sur ladite ossature 2.

Avec un tel montage, les réglages en hauteur et en inclinaison de l'appui-tête peuvent être obtenus respectivement par des déplacements verticaux simultanés des deux broches 4 et 5 et par des déplacements verticaux différenciés de ces deux broches.

En effet, dans ce dernier cas, le déplacement vertical de l'un des deux barreaux 11 et 13 par rapport à l'autre se traduit par un changement d'inclinaison de l'appui-tête.

Pour commander ces différents déplacements verticaux simultanés ou différenciés des deux broches 4 et 5, on prévoit:
— deux crémaillères 18 et 19 sur respectivement les deux pieds desdites broches,
— deux pignons 20 et 21 engrenant directement ou non avec ces crémaillères et immobilisés axialement à l'aide de moyens non représentés,
— une poignée rotative de commande 22 actionnable par la personne assise sur le siège,
— un organe transmetteur de couple 23 solidaire angulairement de la poignée 22,
— et au moins un organe d'accouplement 24 permettant de solidariser angulairement avec l'organe transmetteur 23, soit les deux pignons 20 et 21 en même temps, soit l'un seulement de ces deux pignons.

Dans le mode de réalisation illustré sur la figure 2,
— les deux pignons 20 et 21 engrènent avec les deux crémaillères par l'intermédiaire d'engrenages appropriés 25 et 26 dont les axes horizontaux parallèles sont orientés selon la direction longitudinale du siège, ce qui permet de rendre les deux pignons en question coaxiaux autour d'un axe vertical s'étendant dans le plan longitudinal médian du dossier,
— l'organe transmetteur de couple 23 est un câble souple 27 s'étendant en quart de cercle entre la poignée 22, située sur un côté du dossier à la base de celui-ci, et les pignons 20 et 21,
— le premier pignon 20 est solidarisé angulairement en permanence avec le câble 27,
— et le second pignon 21 est monté fou sur ce câble pour la position axiale de ce dernier correspondant à l'état «poussé» ou enfoncé de la poignée 22 (selon la flèche P), position pour laquelle deux crabots complémentaires constitutifs de l'organe d'accouplement 24 et solidaires respectivement dudit pignon 21 et dudit câble sont séparés l'un de l'autre, la mise en position «tirée» ou sortie (flèche T) de la poignée 22 se traduisant au contraire par la prise mutuelle des deux crabots en question et donc par la solidarisation angulaire du pignon 21 et du câble 23.

Avec un tel mécanisme, il suffit de tourner la poignée 22 en sa position tirée ou sortie pour régler l'appui-tête 1 en hauteur et de tourner cette poignée en sa position poussée ou enfoncée pour régler l'appui-tête en inclinaison: dans le premier cas, les déplacements des deux broches sont simultanés et identiques alors que, dans le second, seul la broche 4 est déplacée ainsi que le barreau 11, lequel est animé d'un mouvement de rotation autour de l'axe du barreau 13.

Du fait de la constitution de l'organe transmetteur de couple 23 par un câble souple, la réalisation qui vient d'être décrite permet de localiser la poignée 22 en tout endroit désirable du siège.

Cette réalisation se prête également à une motorisation, l'extrémité du câble souple 23 la plus éloignée des pignons 20 et 21 pouvant être entraînée par un moteur électrique situé dans l'assise du siège et commandable par un bouton de commande approprié facilement accessible de la personne assise sur le siège.

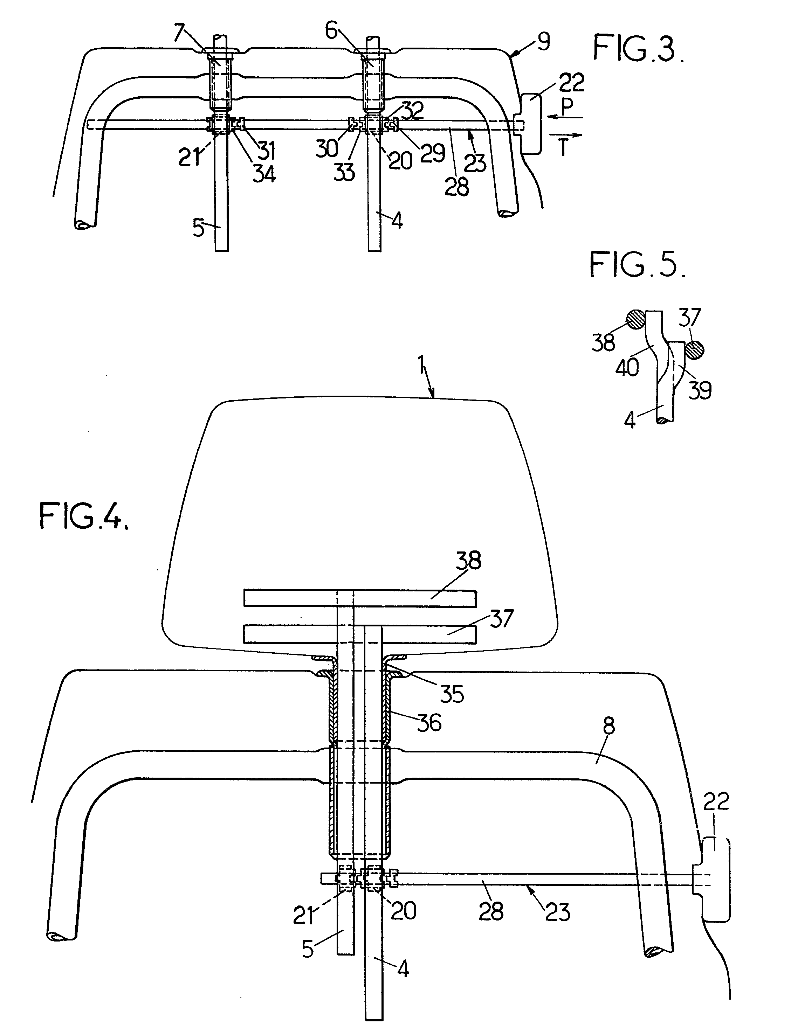

La variante de la figure 3 diffère de la précédente en ce que l'organe transmetteur de couple 23 est une barre fixe 20 qui est montée dans la partie haute du dossier 9 et s'étend selon la largeur du siège.

Les pignons 20 et 21, qui sont toujours immobilisés axialement, sont ici directement en prise avec les crémaillères 18 et 19 portées par les broches 4 et 5 et il sont montés fous sur la barre 28.

Cette barre est solidaire de trois crabots 29, 30 et 31 propres à coagir respectivement avec trois crabots complémentaires 32, 33 et 34 dont les deux premiers sont solidaires du pignon 20 et le troisième, du pignon 21.

L'exercice d'une poussée axiale sur la poignée 22 dans le sens de la flèche P a pour effet d'embrayer les crabots 29 et 31 avec leurs homologues 32 et 34 et donc de solidariser les deux pignons 20 et 21 avec ladite poignée, ce qui permet les réglages en hauteur de l'appui-tête par de simples rotations de cette dernière.

Au contraire, l'exercice d'une traction axiale sur la poignée 2 dans le sens de la flèche T se traduit par l'embrayage mutuel des crabots 30 et 33 et par le débrayage des autres, de sorte que seul le pignon 20 est alors solidarisé avec la poignée 22, ce qui rend possible les réglages de l'appui-tête en inclinaison par les rotations de cette poignée.

La variante des figures 4 et 5 diffère de celle de la figure 3 par les points suivants:
— les deux broches 4 et 5, au lieu d'être montées dans deux manchons distincts 6 et 7 du dossier, sont contenues dans un même fourreau 35 de section allongée lui-même monté verticalement coulissant dans un manchon complémentaire 36 solidarisé avec l'ossature 8 du dossier 9,
— les deux crabots 30 et 31 sont constitués par une seule pièce vu que les deux broches 4 et 5 sont ici très rapprochées,
— les axes horizontaux autour desquels l'ossature de l'appui-tête est montée pivotante sont matérialisée par deux barreaux 37 et 38 dont le premier est soudé contre la face avant de l'extrémité supérieure, de la broche 4, décalée vers l'avant par un coude approprié 39 (figure 5) et dont le second est soudé contre la face arrière de l'extrémité supérieure, de la broche 5, décalée vers l'arrière par un coude 40.

En suite de quoi et quel que soit le mode de réalisation adopté, on dispose finalement d'un appui-tête réglable dont la constitution et le fonctionnement résultent suffisamment de ce qui précède.

Cet appui-tête présente de nombreux avantages par rapport à ceux connus jusqu'à ce jour et, en particulier, la robustesse et la simplicité de la manoeuvre vu:
— que les deux réglages en hauteur et en inclinaison peuvent être assurés très facilement à partir d'un seul et même organe de commande,

— et que les variations d'inclinaison de l'appui-tête nécessitent des efforts relativement faibles en raison de la grandeur du bras de levier mis en oeuvre, bras qui correspond à la distance entre les deux axes horizontaux de pivotement de l'appui-tête.

Bien entendu, il convient dans chaque cas d'assurer l'irréversibilité des commandes, c'est-à-dire de rendre impossibles les déréglages de l'appui-tête en hauteur et/ou en inclinaison par l'exercice de simples poussées sur celui-ci.

Cette irréversibilité est assurée dans le mode de réalisation des figures 1 et 2 en donnant des inclinaisons appropriées aux dents en prise des divers pignons 20, 21, 25, 26 et crémaillères 18, 19.

Pour les autes réalisations, on prévoit avantageusement des organes de verrouillage angulaire au niveau de la poignée de commande 22, pour sa position axiale correspondant à sa solidarisation angulaire avec les deux pignons 20 et 21.

Comme il va de soi, et comme il résulte d'ailleurs déjà de ce qui précède, l'invention ne se limite nullement à ceux de ses modes d'application et de réalisation qui ont été plus spécialement envisagés; elle en embrasse, au contraire, certaines variantes, notamment:

— celle où l'un des deux axes horizontaux de pivotement de l'appui-tête serait matérialisé par un prolongement simplement coudé horizontalement de l'une des deux broches, prolongement situé dans le même plan transversal vertical que cette broche,

— et celles où l'un des deux axes horizontaux de pivotement de l'appuis-tête serait matérialisé par une articulation du type à rotule ou analogue.


## Revendications

1. Siège avec l'appuis-tête réglable en hauteur et en inclinaison pour lequel l'ossature (2) de l'appui-tête (1) est montée sur celle (8) du dossier (9) du siège par l'intermédiaire de deux broches parallèles (4, 5) liées à cette ossature de l'appui-tête et propres à coulisser verticalement dans des logements complémentaires (6, 7) solidaires de l'ossature du dossier, caractérisé en ce que l'ossature (2) de l'appuis-tête est montée pivotante autour de respectivement deux axes horizontaux (11, 13) transversaux décalés longitudinalement l'un par rapport à l'autre et liés respectivement aux deux broches (4, 5) et en ce que des moyens (22-27) actionnables par la personne assise sur le siège sont prevus pour commander à volonté soit les coulissements verticaux simultanés et identiques des deux broches, soit les coulissements verticaux de l'une seulement de ces deux broches.

2. Siège avec l'appui-tête selon la revendication 1, caractérisé en ce que chacun des deux montages pivotants de l'ossature (2) de l'appui-tête est réalisé autour de l'extrémité rectiligne (11, 13) d'un prolongement, d'une broche (4, 5), doublement coudé horizontalement, une prémière fois longitudinalement, vers l'avant (en 12) pour une broche (5) et vers l'arrière (en 10) pour l'autre (4), et une seconde fois transversalement en direction de l'autre bronche (5, 4).

3. Siège avec l'appui-tête selon la revendication 1, caractérisé en ce que chacun des deux montages pivotants de l'ossature (2) de l'appui-tête est réalisé autour d'un bureau (37, 38) rapporté par soudure contre la face avant (ou arrière) de l'extrémité supérieure d'une broche (4, 5), extrémité elle-même décalée vers l'avant (ou vers l'arrière) par rapport à l'axe du tronçon (35) coulissant de cette broche.

4. Siège avec appui-tête selon l'une quelconque des précédentes revendications, caractérisé en ce que chacun des deux montages pivotants de l'ossature (2) de l'appui-tête est réalisé par emprisonnement d'un barreau cylindrique d'axe horizontal (11, 37; 13, 38) solidaire d'une broche (4, 5) entre deux demi-coquilles (14, 15) serrés l'un contre l'autre et faisant partie de ladite ossature de l'appui tête.

5. Siège avec appui-tête selon l'une quelconque des précédentes revendications, caractérisé en ce que les moyens de commande des déplacements des broches (4, 5) comprennent deux crémaillères (18, 19) prévues respectivement sur les pieds, de ce deux broches, situés dans le dossier (9), deux pignons (20, 21) engrenant, directement ou non, avec respectivement ces deux crémaillères et immobilisés axialement, un organe de commande rotatif (22) actionnable par la personne assise sur la siège, un organe transmetteur de couple (23) solidarisé angulairement avec l'organe de commande, et des organes d'accouplement (24) agencés de façon à solidariser angulairement avec ledit élément transmetteur, soit l'un seulement des deux pignons, soit ces deux pignons en même temps.

6. Siège avec l'appui-tête selon la revendication 5, caractérisé en ce que les organes d'accouplement comprennent des crabots (24; 29-34) solidaires angulairement respectivement des pignons (20, 21) et de l'organe transmetteur de couple (23) et propres à être accouplés et désaccouplés entre eux par leurs simples déplacements relatifs axiaux, lesquels sont commandés par des déplacements ariaux de l'organe de commande (22).

7. Siège avec appui-tête selon l'une quelconque des revendications 5 et 6, caractérisé en ce que l'organe transmetteur de couple est une barre horizontale (28).

8. Siège avec appui-tête selon l'une quelconque des revendications 5 et 6, caractérisé en ce que l'organe transmetteur de couple est un câble souple (27) et en ce que l'organe de commande rotatif est une poignée (22) montée en un emplacement du siège facilement accessible par une main de la peronne assise sur ce siège.

9. Appui-tête propre à équiper un siège selon l'une quelconque des précédentes revendications, caractérisé en ce que son ossature (2) est montée pivotante autour de deux axes horizontaux décalés longitudinalement l'un par rapport à l'autre et liés respectivement avec les extrémité supérieures de deux broches (4, 5) parallèles, sensiblement verticales et disposées côte à côte selon la largeur de l'appui-tête.


## Patentansprüche

1. Fahrzeugsitz mit einer in ihrer Höhe und Neigung verstellbaren Kopfstütze, bei dem das Gestell (2) der Kopfstütze (1) an dem Gestell (8) der Rückenlehne (9) des Sitzes über zwei parallel verlaufende Stangen (4, 5) befestigt ist, die mit dem Gestell der Kopfstütze verbunden und in senkrechter Richtung in entsprechenden Lagern (6, 7) verschiebbar sind, die fest an dem Gestell der Rückenlehne angebracht sind, dadurch gekenzeichnet, dass das Gestell (2) der Kopfstütze schwenkbar um zwei waagerecht verlaufende Querachsen (11, 13) befestigt ist, die in Längsrichtung zueinander versetzt verlaufen und mit den beiden Stangen (4, 5) verbunden sind und dass Einrichtungen (22 bis 27), die durch die auf dem Sitz befindliche Person betätigt werden können, vorgesehen sind, um je nach Wunsch entweder gleichzeitige senkrechte und identische Verschiebungen der beiden Stangen oder senkrechte Verschiebungen nur einer der beiden Stangen vorzunehmen.

2. Fahrzeugsitz nach Anspruch 1, dadurch gekennzeichnet, dass die beiden schwenkbaren Befestigungen des Gestells (2) der Kopfstütze an dem geradlinigen Ende (11, 13) jeweils einer Verlängerung einer Stange (4, 5) vorgesehen sind, die zweifach horizontal umgebogen ist, wobei die Verlängerung einer Stange (5) einmal in Längerichtung nach vorn (bei 12) und die der anderen Stange (4) einmal nach hinten (bei 10) und diese Verlängerung ein zweites mal quer jeweils in Richtung der anderen Stange (5, 4) umgebogen ist.

3. Fahrzeugsitz nach Anspruch 1, dadurch gekennzeichnet, dass die beiden schwenkbaren Befestigungen des Gestells (2) der Kopfstütze an jeweils einem Stab (37, 38) vorgesehen sind, von denen der eine an der vorderen und der andere an der hinteren Fläche des oberen Endes jeweils einer Stange (4, 5) durch Schweissen befestigt ist, wobei die Enden selbst in bezug auf die Achse des gleitenden Abschnittes (35) der Stangen nach vorn und hinten versetzt verlaufen.

4. Fahrzeugsitz nach einem der vorhergehenden Ansprüche, dadurch gekennzeichnet, dass die beiden schwenkbaren Befestigungen des Gestells (2) der Kopfstütze dadurch gebildet werden, dass ein mit horizontaler Achse zylindrischer Stab (11, 37; 13, 38) der fest mit einer Stange (4, 5) verbunden ist, zwischen zwei Halbschalen eingeschlossen ist, die gegeneinander gedrückt und Teil des Gestells der Koftstütze sind.

5. Fahrzeugsitz nach einem der vorhergehenden Ansprüche, dadurch gekennzeichnet, dass die Einrichtung zur Steuerung der Verschiebungen der Stangen (4, 5) zwei Zahnstangen (18, 19), die an den unteren Enden der beiden Stangen vorgesehen und innerhalb der Rückenlehne (9) angeordnet sind sowie zwei Triebräder (20, 21), die direkt oder indirekt mit den beiden Zahnstangen in Eingriff kommen und in axialer Richtung unverschiebbar sind, ein drehbares Steuerorgan (22), das durch die auf dem Sitz befindliche Person betätigt werden kann, eine Einrichtung (23) zur Übertragung des Drehmomentes, die winklig zu dem Steuerorgan angebracht ist, und eine Kopplung (24) enthält, die so ausgebildet ist, dass sie entweder nur eins der beiden Zanhräder oder beide Zahnräder gleichzeitig winklig mit der Einrichtung zur Übertragung des Drehmomentes verbindet.

6. Fahrzeugsitz nach Anspruch 5, dadurch gekennzeichnet, dass die Kupplung Klauen (24; 29 bis 34) enthält, die winklig mit den Zahnrädern (20, 21) und der Einrichtung zur Übertragung des Drehmomentes verbunden sind und die durch einfache relative Verschiebungen in axialer Richtung, die durch axiale Verschiebungen des Steuerorgans (22) gesteuert werden, kuppelbar und entkuppelbar sind.

7. Fahrzeugsitz nach einem der Ansprüche 5, und 6, dadurch gekennzeichnet, dass die Einrichtung zur Übertragung des Drehmomentes aus einer waagerecht verlaufenden Stange (28) besteht.

8. Fahrzeugsitz nach einem der Ansprüche 5 und 6, dadurch gekennzeichnet, dass die Einrichtung zur Übertragung des Drehmomentes ein biegsames Kabel (27) ist und dass das drehbar Steuerorgan ein an einer Sitzfläche des Sitzes befestigter Knopf (22) ist, der für eine auf dem Sitz befindliche Person leicht zugänglich ist.

9. Kopfstütze für einen Fahrzeugsitz nach einem der vorhergehenden Ansprüche, dadurch gekennzeichnet, dass das Gestell (2) der Kopfstütze um zwei waagerechte Achsen schwenkbar ist, die in Längsrichtung zueinander versetzt angeordnet und mit den beiden oberen Enden zweier Stangen (4, 5) verbunden sind, die parallel zueinander und im wesentlichen senkrecht verlaufen und nebeneinander entsprechend der Breite der Kopfstütze angeordnet sind.

**Claims**

1. Seat with headrest adjustable in height and in slope for which the framework (2) of the headrest (1) is mounted on that (8) of the seat back (9) of the seat by means of two parallel pins (4, 5) connected to this framework of the headrest and adapted for sliding vertically in complementary housings (6, 7) fixed to the framework of the seat back, characterized in that the framework (2) of the headrest is mounted for pivoting about respectively two transverse horizontal axes offset longitudinally with respect to each other and connected respectively to the two pins (4, 5) and in that means (22-27) operable by the person sitting in the seat are provided for controlling at will either the simultaneous and identical vertical sliding of the two pins, or the vertical sliding of only one of these two pins.

2. Seat with headrest according to claim 1, characterized in that each of the two pivoting mountings of the framework (2) of the headrest is provided about the rectilinear end (11, 13) of an extension, of a pin (4, 5), doubly bent horizontally, one longitudinally forwardly, (at 12) for one pin (5) and rearwardly (at 10) for the other (4), and a second time transversely in the direction of the other pin (5, 4).

3. Seat with headrest according to claim 1, characterized in that each of the two pivoting mountings of the framework (2) of the headrest is provided about a bar (37, 38) welded against the front (or rear) face of the upper end of a pin (4, 5), which end is itself offset forwardly (or rearwardly) with respect to the axis of the sliding section (35) of this pin.

4. Seat with headrest according to any one of the preceding claims, characterized in that each of the two pivoting mountings of the framework (2) of the headrest is provided by imprisoning a cylindrical bar with horizontal axis (11, 37; 13, 38) integral with a pin (4, 5) between two half shells (14, 15) clamped against each other and forming a part of said framework of the headrest.

5. Seat with headrest according to any one of the preceding claims, characterized in that the means controlling the movements of the pins (4, 5) comprise two racks (18, 19) provided respectively on the feet, of these two pins, situated in the seat back (9), two pinions (20, 21) meshing, directly or not, with respectively these two racks and being immobilized axially, a rotary control member (22) operable by the person sitting in the seat, a torque transmitting member (23) engaging angularly with the control member, and coupling members (24) adapted so as to angularly engage either one only of the two pinions, or these two pinions at the same time, with said transmitting element.

6. Seat with headrest according to claim 5, characterized in that the coupling members comprise dogs (24; 29-34) engaged angularly respectively with the pinions (20, 21) and with the torque transmitting member (23) and adapted for being coupled together and uncoupled by simple relative axial movements of the control member (22).

7. Seat with headrest according to any one of the claims 5 and 6, characterized in that the torque transmitting member is a horizontal bar (28).

8. Seat with headrest according to any one of the claims 5 and 6, characterized in that the torque transmitting member is a flexible cable (27) and in that the rotary control member is a handle (22) mounted in a position of the seat readily accessible to the hand of a person sitting in this seat.

9. Headrest for equipping a seat according to any one of the preceding claims, characterized in that its framework (2) is mounted for pivoting about two horizontal shafts offset longitudinally with respect to each other and connected respectively with the upper ends of two substantially vertical parallel pins (4, 5) disposed side by side along the width of the headrest.

FIG.1.

FIG.2.

0 209 417

0 209 417

FIG.3.

FIG.5.

FIG.4.

9